# EUROPEAN PATENT APPLICATION

(11) **EP 0 538 583 A1**
(43) Date of publication of application: **28.04.1993**
(21) Application number: 92114190.9
(22) Date of filing: 20.08.1992
(51) Int. Cl.: G11B 11/10

(54) **Method for the preparation of magneto-optical recording medium**

(30) Priority: 05.09.1991 JP 254776/91
(71) Applicant: SHIN-ETSU CHEMICAL CO., LTD., Chiyoda-ku Tokyo (JP)
(72) Inventor: Tawara, Yoshio, Setagaya-ku, Tokyo (JP); Tokunaga, Katsushi, Kawasaki-shi, Kanagawa-ken (JP); Shimizu, Yoshiaki, Annaka-shi, Gunma-ken (JP); Kaneko, Hideo, Kawasaki-shi, Kanagawa-ken (JP)
(74) Representative: Raeck, Wilfrid, Dipl.-Ing.

(57) **Abstract**

Method for the preparation of a magneto-optical recording medium consisting of a transparent plastic substrate plate and layers successively formed thereon including a first dielectric layer, recording layer, second dielectric layer and reflecting layer by the sputtering method. Prior to the formation of the recording layer, the first dielectric layer on one surface of the substrate and a moisture release-preventing layer on the other surface of the substrate, which effectively prevents release of moisture from the plastic substrate are formed, which otherwise adversely affects the recording layer by oxidation, so that the time-consuming drying treatment of the substrate plate can be omitted to greatly improve the productivity of the recording media.

## Description

### BACKGROUN OF THE INVENTION

The present invention relates to an improvement in the method for the preparation of a magneto-optical recording medium or, more particularly, to an improvement for greatly increasing the efficiency in the method for the preparation of a magneto-optical recording medium of which the substrate plate is made from a transparent plastic resin.

A magneto-optical recording medium typically has a laminar structure successively consisting of a substrate plate made, for example, from a transparent plastic resin, a first dielectric layer formed on the substrate, a recording layer of a specific magnetic alloy formed on the first dielectric layer, a second dielectric layer formed on the recording layer and a metallic reflecting layer formed on the second dielectric layer. These successive layers are formed each by the method of sputtering and the like conducted in vacuum to cause deposition of the respective layers on the surface of the underlying layer successively.

Several kinds of transparent plastic resins are used for the substrate plate, of which polycarbonate resins, polyolefin resins and the like are the most widely used ones. Plastic plates made from such a resin as a substrate plate for a magneto-optical recording medium have a problem that, since these plastic resin plates more or less absorb or adsorb moisture when they are kept in an ordinary moisture-containing atmosphere, the plastic resin substrate must be completely dried before the plate is subjected to the step of sputtering or other process for the formation of the successive layers because, when the layers are formed on the surface of an incompletely dried substrate, an adverse influence is caused on the performance of the resultant magneto-optical recording medium. Namely, the moisture absorbed in or adsorbed on the plastic substrate is released when the substrate is brought into vacuum so that the recording layer, which is made usually from a rare earth metal-containing alloy highly susceptible to oxidation, may eventually be oxidized even by the trace amount of water vapor released from the substrate.

Accordingly, it is a usual practice that the sputtering process is preceded by a demoisturizing or degassing process by keeping the plastic substrate in vacuum for several hours or even longer or heating the same at an elevated temperature of 80°C or higher to accelerate release of moisture therefrom. Even by undertaking these measures, removal of moisture from the substrate is sometimes incomplete unless the length of the treatment time for the release of moisture in vacuum is unduly extended or the temperature is unduly increased resulting in a great decrease in the productivity of the magneto-optical recording media or an inconvenience due to the necessity of installation of a separate degassing chamber apart from the sputtering chamber.

### SUMMARY OF THE INVENTION

The present invention accordingly has an object to provide an improvement in the method for the preparation of a magneto-optical recording medium having a laminar structure consisting of a substrate plate of a plastic resin and layers including a first dielectric layer, recording layer, second dielectric layer and reflecting layer successively formed on the substrate plate by a vacuum process such as sputtering.

Thus, the present invention provides an improvement, in a method for the preparation of a magneto-optical recording medium by successively forming, on one surface of a substrate plate made from a transparent plastic resin, a first dielectric layer, a recording layer, a second dielectric layer and a reflecting layer, which comprises forming, prior to the formation of the recording layer, a layer of a dielectric material such as silicon nitride on both surfaces of the substrate plate. In other words, the substrate plate prior to the formation of the recording layer is provided not only with the first dielectric layer as the underlying layer of the recording layer but also with a layer of a dielectric material formed on the surface thereof reverse to the first dielectric layer as a moisture release-preventing layer.

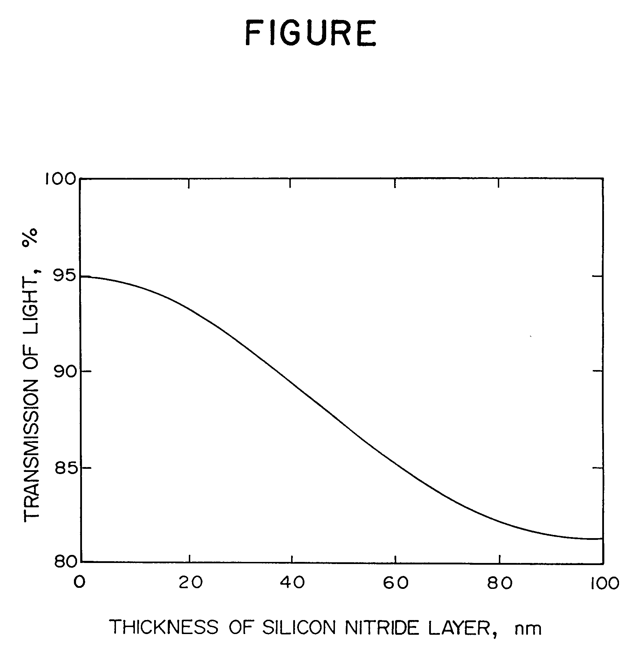

### BRIEF DESCRIPTION OF THE DRAWING

The figure is a graph showing the % transmission of light of 780 nm wavelength as a function of the thickness of a silicon nitride layer formed on a polycarbonate substrate plate.

### DETAILED DESCRIPTION OF THE PREFERRED EMBODIMENTS

As is described above, the most characteristic feature of the improvement according to the present invention consists in the formation of a layer of a dielectric material on allover the surface of the plastic-made substrate plate prior to the formation of the recording layer by the deposition of a magnetic alloy in a vacuum process thus to form a first dielectric layer on one surface of the substrate plate and a moisture release-preventing layer on the other surface of the substrate plate. By virtue of the dielectric film formed to envelop the entire substrate plate, release of moisture from the substrate plate is prevented before, during or after formation of the recording layer so that the time-consuming degass-ing process of the substrate plate can be omitted without the trouble due to oxidation of the recording layer by the moisture released to the atmosphere from the substrate. Therefore, the productivity of the manufacturing process of the magneto-optical recording media can be greatly improved.

The substrate plate of a plastic resin is usually provided with a tracking groove on one surface thereof and it is a typical process that the substrate plate is successively provided on the surface having the tracking groove with a first dielectric layer, magnetic recording layer, second dielectric layer and reflecting layer. In the process according to the invention, the plastic substrate plate is first provided with a layer of a dielectric material not only on the surface having the tracking groove but also on the reverse surface thus to completely envelop the substrate plate with a film of the dielectric material. Needless to say, the film of the dielectric material formed on the surface of the substrate having the tracking groove serves as the first dielectric layer on which the magnetic recording layer is formed. In this regard, the dielectric material is preferably silicon nitride though not particularly limitative thereto including aluminum nitride and other inorganic materials.

The thickness of the silicon nitride film formed on both surfaces of the substrate plate is in the range from 5 nm to 50 nm in view of the duty of the film to prevent release of moisture from the substrate plate. Namely, the preventing effect on moisture release is insufficient when the thickness of the film is too small. When the thickness is too large, on the other hand, an adverse influence is caused on the performance of the recording medium due to the increased reflection of light on the surface of the substrate plate so as to cause a requirement to increase the power output of the laser beam for recording and reading-out of the signals in addition to the disadvantage that an unduly long time is taken for the formation of the dielectric film by sputtering or other suitable means. The above mentioned upper limit in the thickness of the silicon nitride layer is supported also by the result of the calculation for the light transmission through the layer as a function of the thickness of the silicon nitride layer. Thus, calculation was performed by taking the refractive index of the polycarbonate resin as 1.584, the refractive index of silicon nitride as 2.0 and the wavelength of light as 780 nm to give the results graphically shown in the figure of the accompanying drawing, in which the % transmission of light is taken as the ordinate and the thickness of the silicon nitride layer as the abscissa. As is understood from this graph that the light transmission is greatly decreased when thickness of the silicon nitride layer exceeds 50 nm. It is not always necessary that the thickness of the dielectric film formed on the substrae plate is the same on both surfaces. The film of silicon nitride on the surfaces of the substrate plate can be formed most conveniently by the sputtering method well established in the art. When the sputtering chamber is provided with a special holder of the substrate plate, film deposition on both surfaces can be performed simultaneously so as to save the time taken for the formation of the silicon nitride film on two surfaces.

Except that the plastic substrate plate is first provided with a film of a dielectric material such as silicon nitride on both surfaces, the subsequent procedure for the preparation of the magneto-optical recording medium can be conventional including formation of the magnetic recording layer, second dielectric layer of, for example, silicon nitride and metallic reflecting layer each by a suitable method such as sputtering. Since the moisture-absorptive plastic substrate plate is completely enveloped with the first formed film of silicon nitride, these subsequent procedures can be performed without any adverse influences caused by the moisture released from the substrate plate even by omitting the time-consuming degassing treatment.

In the following, the improvement obtained by the present invention is illustrated in more detail by way of examples and comparative examples.

### Example.

A polycarbonate resin plate as a substrate having a diameter of 86 mm and a thickness of 1.2 mm and provided with a tracking groove on one surface was set in a sputtering chamber and, without taking any degassing treatment for the removal of moisture, a film of silicon nitride having a thickness of 30 nm was formed on both surfaces of the substrate by the method of sputtering. Thereafter, a recording layer of a Tb-Fe-Co magnetic alloy having a thickness of 16 nm was formed on the silicon nitride layer formed on the substrate surface having the tracking groove also by the sputtering method without introducing air into the sputtering chamber followed by successive formation of a second silicon nitride layer having a thickness of 28 nm and reflecting layer of aluminum having a thickness of 40 nm to complete a magneto-optical recording medium, which is referred to as the recording medium I hereinbelow.

For comparison, another magneto-optical recording medium, referred to as the recording medium II hereinbelow, was prepared in the same manner as above except that the first silicon nitride film was formed only on one of the substrate surfaces having the tracking groove.

For further comparison, a third magneto-optical recording medium, referred to as the recording medium III hereinbelow, was prepared in just the same manner as in the preparation of the recording medium I except that the first formation of the silicon nitride film on both of the substrate surfaces was preceded by a degassing treatment by keeping the substrate plate in the vacuum atmosphere of 1 × 10⁻⁶ Torr or below in the sputtering chamber for 100 minutes at 20 °C.

Each of these recording media I, II and III, for each of which three test specimens were prepared in the same manner, was subjected to the measurement of the reflectivity of light at a wavelength of 780 nm to give results of 20.47%, 18.91% and 20.57%, respectively, as an average of the three values for the three test specimens indicating that omission of the degassing treatment has no adverse influences on the reflectivity of light when the substrate plate is provided with an enveloping film of silicon nitride on allover the surfaces prior to the formation of the magnetic recording layer.

## Claims

1. In a method for the preparation of a magneto-optical recording medium by successively forming, on the surface of a substrate plate made from a transparent plastic resin, a first dielectric layer, a recording layer, a second dielectric layer and a reflecting layer, the improvement which comprises forming, prior to the formation of the recording layer, a first dielectic layer on one surface of the substrate plate as an underlying layer of the recording layer and a moisture release-preventing layer on the other surface of the substrate plate.

2. The improvement as claimed in claim 1 in which the first dielectric layer and the moisture release-preventing layer are formed from the same inorganic material.

3. The improvement as claimed in claim 2 in which the inorganic material is silicon nitride.

4. The improvement as claimed in claim 1 in which the moisture release-preventing layer has a thickness in the range from 5 nm to 50 nm.

5. The improvement as claimed in claim 1 in which the first dielectric layer and the moisture release-preventing layer are formed simultaneously by the method of sputtering.

6. The improvement as claimed in claim 1 in which formation of the first dielectric layer and the moisture release-preventing layer is performed without a degassing treatment of the substrate plate.
